# FASCICULE DE BREVET EUROPEEN

(11) **EP 3 775 757 B1**
(45) Date de publication et mention de la délivrance du brevet: **12.04.2023**
(21) Numéro de dépôt: 19719543.1
(22) Date de dépôt: 28.03.2019
(51) Int. Cl.: G01B 7/16, G01B 11/16, G01M 5/00, G01B 7/14, G01B 11/02

(54) **DISPOSITIF DE MESURE DE L'ETAT STRUCTUREL D'UN EDIFICE**
VERFAHREN ZUR VERMESSUNG DES STRUKTURELLEN ZUSTANDES EINES GEBÄUDES
METHOD FOR MEASURING THE STRUCTURAL STATE OF A BUILDING

(30) Priorité: 28.03.2018 FR 1852696
(43) Date de publication de la demande: 17.02.2021
(73) Titulaire: Perennea Developpement, 11100 Narbonne (FR)
(72) Inventeur: JALABERT, Jean-Luc, 11100 Narbonne (FR); ADELL, Jessy, 11100 Narbonne (FR)
(74) Mandataire: Rhein, Alain
(86) Numéro de dépôt international: PCT/FR2019/000041
(87) Numéro de publication internationale: WO 2019/185998

(56) Documents cités:
- WO-A1-2006/120435
- WO-A1-2013/007720
- WO-A1-2017/063030
- WO-A1-2017/144710
- CN-U- 204 064 248
- US-A- 3 908 279
- US-A- 4 249 314
- US-A1- 2013 232 804
- US-A1- 2017 265 810

## Description

La présente invention concerne le domaine de la surveillance de l'évolution des contraintes que subit une structure ou un édifice, telles que des vibrations ou des phénomènes de fissurales.

Plus particulièrement, la présente invention se rapporte à un procédé de surveillance d'au moins une mesure de l'état structurel d'un édifice, ainsi qu'une installation pour la mise en oeuvre de ce procédé et un dispositif de mesure que comporte une telle installation.

Quelle que soit la structure ou la construction considérée, celle-ci a été édifiée sur un sous-bassement dont les caractéristiques peuvent évoluer dans le temps, soit en raison de phénomènes géologiques, climatiques ou autres. Ces évolutions affectent nécessairement cette structure ou cette construction sans compter que celle-ci peut, par ailleurs, subir des contraintes diverses, de vibrations, de modifications de charge, de variations de température, ne dépendant pas nécessairement de ces caractéristiques du support sur lequel elles reposent.

En particulier, de telles structures ou constructions subissent des phénomènes fissuraux dont il convient de surveiller l'évolution de manière à analyser leur impact sur la résistance, la solidité de l'édifice.

A ce sujet, il est d'ores et déjà connu des dispositifs de mesure dite potentiométrique permettant de faire des relevés périodiques de l'évolution de l'écartement d'une fissure.

En particulier, on connaît par le document WO 2006/120435 un tel dispositif sous forme d'un émetteur et d'un récepteur inductifs venant se fixer de part et d'autre d'une fissure. Un tel dispositif peut fonctionner avec d'autres capteurs environnementaux permettant de mesurer, par exemple, l'humidité, la température, la résistance, la conductance, les vibrations, la pression atmosphérique, sachant que l'ensemble des informations relevées au moyen de ce dispositif et/ou de ces capteurs est susceptible d'être adressé, au travers d'un réseau de télécommunication et de moyens de transmission adaptés, vers une unité de traitement éloignée.

De même, il est connu par le document WO 2012/025763, un autre dispositif de surveillance fissurai d'une paroi sous forme d'un capteur d'élongation de fissure formé par au moins un capteur de champ magnétique disposé d'un côté de la fissure et un aimant de l'autre. Dans ce document, il est encore prévu que le dispositif peut comporter plusieurs de ces capteurs de champ magnétique, de manière à mesurer l'évolution de la fissure dans plusieurs directions.

Tout comme dans le document précédent, le dispositif ici décrit comporte des moyens de transmission à distance des données prélevées vers une unité de traitement. Toutefois, de tels capteurs de champ magnétique ne peuvent pas être utilisés pour surveiller un édifice présentant une structure métallique.

Il est encore connu par le document WO 2013/007720 un dispositif de surveillance vibratoire et fissurai d'une paroi sous forme de deux modules fixés, l'un d'un côté et l'autre, de l'autre côté d'une fissure. Le premier module, équipé d'une carte électronique, comporte un bras relié à l'autre module au travers d'un capteur d'élongation formé par une membrane potentiométrique. Plus particulièrement, le second module comporte un élément glisseur en contact mécanique ou électrique avec la membrane potentiométrique.

Si dans ce document, tout comme tous les autres documents de l'état de la technique, il est prévu des moyens de transmission à distance des mesures effectuées, on observera que ces mesures sont systématiquement et directement transmises par le dispositif en question vers une unité de traitement distante. Aussi, chacun de ces dispositifs doit être équipé de moyens de transmission adaptés à la distance qui les sépare de cette unité de traitement des données.

En particulier, à moins d'imaginer d'installer celle-ci à proximité du dispositif de mesure, celui-ci doit être pourvu de moyens de transmission de type GSM ou autres pour transmettre les données à longue distance. Ceci complexifie considérablement le dispositif de mesure en question, sans compter que les moyens d'alimentation autonomes doivent être dimensionnés en conséquence si l'on souhaite éviter leur remplacement et/ou leur rechargement de manière régulière.

Une solution pour répondre à ce problème d'autonomie consiste, évidemment, à raccorder les dispositifs de mesure à un réseau d'alimentation électrique à condition qu'une telle alimentation soit présente sur site, sans compter les risques accrus de coupure de cette alimentation.

En outre, toutes ces solutions de mesure potentiométrique, qu'elles soient par champ magnétique ou à l'aide d'un conducteur dont la résistance évolue en fonction de son étirement, sont d'une précision relative, car elles sont fonction de facteurs environnementaux divers, tels que la température, l'humidité, les matériaux environnementaux. De plus les capteurs potentiométriques sont encombrants au regard de leur course de mesure et si certains d'entre eux sont susceptibles de donner une information de déplacement selon deux directions, l'accès à une information relative à des déplacements intervenant selon trois axes n'est possible qu'au travers du dédoublement de ces capteurs potentiométriques.

Par ailleurs, comme cela a été relevé, notamment au vu de l'état de la technique correspondant au document WO 2006/120435, les dispositifs de surveillance fissuraux nécessitent leur combinaison à d'autres types de capteurs si l'on souhaite obtenir des informations plus précises relatives à l'évolution d'une fissure. Ainsi, par exemple, l'adjonction d'un accéléromètre, d'un gyroscope, etc..., est utile pour recueillir une information relative à la vitesse des déplacements constatés.

C'est pour remédier à l'ensemble de ces inconvénients et d'autres qui apparaîtront dans la suite de la description que la demanderesse a développé la présente invention.

Un premier aspect de l'invention se rapporte à un dispositif de mesure de l'état structurel d'un édifice comprenant au moins un module référentiel, une cible, ainsi que des moyens de mesure de déplacement de la cible par rapport au module référentiel, les moyens de mesure comportent des moyens de détection de déplacement de la cible dans un référentiel trois axes.

Le dispositif de mesure se caractérise en ce qu'il comporte un capteur de vibrations mesurant les vibrations de l'édifice, les moyens de mesure de déplacement comportant un câble polymérique élastique conducteur à résistivité variable, le câble polymérique relie, en étant maintenu en tension, le module référentiel et la cible, de plus, le au moins un module référentiel et/ou la cible comporte au moins un capteur de résistivité coopérant avec le câble polymérique. Au travers, d'une part, d'un capteur de résistivité coopérant avec un câble polymérique tel que revendiqué, et d'autre part, d'un capteur de vibration, il est possible de mesurer, à un instant donné :
- la distance et l'intensité de déplacement d'un module référentiel par rapport à la cible selon un repère tridimensionnel, et
- les vibrations de l'édifice également dans un repère tridimensionnel.

La corrélation ultérieure de ces données permet de surveiller l'état structurel d'un édifice.

Selon une première caractéristique du premier aspect de l'invention, le dispositif de mesure comprend une gaine de protection ménageant un espace de mesure confiné dans lequel s'étend le câble polymérique.

Selon une deuxième caractéristique du premier aspect de l'invention, le module référentiel et/ou une cible comportent un support de fixation permettant de les rapporter fixement à une paroi de l'édifice dont il convient de surveiller la structure.

Selon le premier aspect de l'invention, la cible est formée par un support de fixation ou par un module cible.

Selon une particularité de l'invention, lorsque la cible est formée par un support de fixation, les moyens de mesure comprenant un câble électrique de retour d'information qui est relié au câble polymérique et s'étend entre le support de fixation, le câble électrique est enroulé autour du câble polymérique ou intégré à la gaine de protection.

A l'inverse, lorsque la cible est formée par un module cible, le retour d'information est réalisé par un capteur de résistivité. Ce capteur de résistivité est intégré au module cible au niveau du point de fixation du câble polymérique. Selon l'invention, un module est défini par un boîtier rigide et étanche à l'eau et à l'air. De préférence, le boitier est conçu sous forme de deux demi-coquilles solidarisées l'une à l'autre.

Un deuxième aspect de l'invention se rapporte à un procédé de surveillance d'au moins une mesure de l'état structurel d'un édifice mettant en oeuvre au moins un dispositif de mesure selon le premier aspect de l'invention.

Le procédé se caractérise en ce qu'il comporte:
- une étape de paramétrage d'un état initial d'au moins un dispositif de mesure intégrant au moins un capteur de vibrations et des moyens de mesure de déplacement, chaque mesure générant des données ;
- une étape de relevés périodiques d'au moins une mesure de vibration et/ou de déplacement au moyen d'au moins un dispositif de mesure intégrant au moins un capteur de vibrations et des moyens de mesure de déplacement, chaque mesure générant des données ;
- une étape de transmission périodique des données générées vers au moins une unité de traitement distante du dispositif de mesure. une étape de comparaison des données de vibration et/ou de déplacement par rapport à l'état initial du dispositif de mesure ; et
- une étape d'avertissement, lorsque les données de vibrations et/ou de déplacement dépassent un écart seuil déterminé par rapport à l'état initial d'un dispositif de mesure.

Selon une deuxième caractéristique du deuxième aspect de l'invention, le procédé de surveillance comporte une étape de codage des données permettant d'identifier la provenance des données enregistrées en fonction :
- du dispositif de mesure dont elles proviennent ;
- du capteur les ayant mesurés ; et
- de l'instant T auquel elles ont été mesurées.

Selon une troisième caractéristique du deuxième aspect de l'invention, le procédé de surveillance comporte une étape de tri des données de manière à les ordonner en fonction :
- du dispositif de mesure dont elles proviennent ;
- du capteur les ayant mesurés ; et
- de l'instant T auquel elles ont été mesurées.

Un troisième aspect de l'invention concerne une installation de surveillance de l'état structurel d'un édifice, caractérisée par le fait qu'elle comporte, d'une part, au moins un dispositif de mesure selon le premier aspect de l'invention, le au moins un dispositif de mesure étant équipé de moyens de transmission à distance, et d'autre part, une unité de traitement distante du dispositif de mesure, l'unité de traitement étant adaptée à réceptionner et classer les données transférées en fonction :
- du dispositif de mesure dont elles proviennent ;
- du capteur les ayant mesurés ; et
- de l'instant T auquel elles ont été mesurées.

Selon une particularité du troisième aspect de l'invention, le dispositif de mesure comporte, au moins un module de référentiel associé à une cible, le module de référentiel et la cible étant reliés au travers du câble polymérique, alors que la cible est formée par un module cible ou un support de fixation.

Selon une variante du troisième aspect de l'invention, l'installation comporte une unité relai (15) comprenant :
- un récepteur (16) des données émises par les moyens de transmission (14) d'au moins un dispositif de mesure (11) ;
- des moyens d'enregistrement (17) des données transmises ;
- des moyens de transfert (18) à distance des données ; et
- des moyens d'alimentation électrique autonomes (19) et/ou de moyens de raccordement (20) à une alimentation électrique externe.

D'autres particularités et avantages apparaîtront dans la description détaillée qui va suivre se rapportant à des exemples de réalisation donnés à titre indicatif et non limitatifs.

La compréhension de cette description sera facilitée en se référant aux dessins ci-joints dans lesquels :
- la figure 1 correspond à représentation schématisée d'un procédé de surveillance de l'état structurel d'un édifice conforme à l'invention ;
- la figure 2 est une représentation schématisée d'une installation pour la mise en oeuvre du procédé de la figure 1 ;
- la figure 3 est une représentation schématisée d'un dispositif de mesure non-revendiqué comportant des moyens de mesure de déplacement de type optique sous forme d'un émetteur/récepteur laser ;
- la figure 4 est une représentation schématisée d'un dispositif de mesure comportant des moyens de mesure de déplacement sous forme d'un câble polymérique conducteur s'étendant entre un module référentiel et un module cible ;
- la figure 5 est une représentation d'un dispositif de mesure selon la figure 4 ;
- la figure 6 est une représentation schématisée de moyens d'ajustement de précision du dispositif de mesure de la figure 4 ;
- les figures 7 à 12 sont des représentations de diverses possibilités de fixation du dispositif de mesure de la figure 4 en fonction de la configuration structurelle d'un édifice ;
- la figure 13 est une représentation schématisée d'un dispositif de mesure adapté à mesurer les vibrations d'un édifice ;
- les figures 14 à 17 correspondent à différentes possibilités d'installation de l'invention ;
- la figure 18 est une représentation d'un dispositif de mesure installé sur un panneau d'affichage ; et
- la figure 19 est une représentation d'une installation de suivi d'un pont ou viaduc comprenant plusieurs dispositifs de mesure.

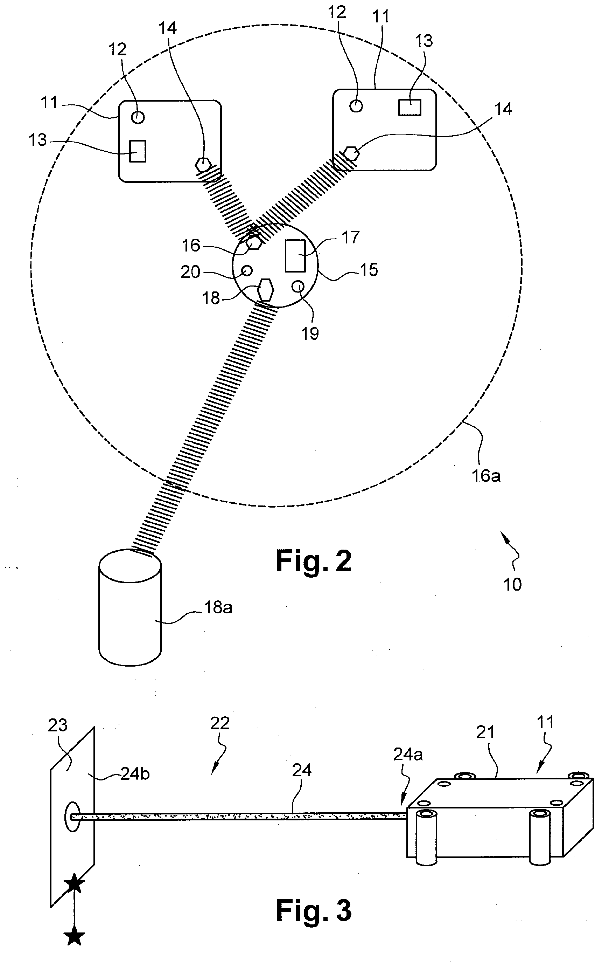

Comme illustré à la figure 2, l'invention concerne une installation 10 pour la mise en oeuvre d'un procédé de surveillance de l'état structurel d'un édifice.

A ces fins, l'installation 10 comprend au moins un dispositif de mesure 11 comportant des moyens d'alimentation électrique autonomes 12. Les moyens d'alimentation électrique autonomes 12 alimentent au moins un capteur 13 de vibrations et/ou de déplacement, ainsi que des moyens de transmission à distance 14 des données générées par le ou les capteur(s) 13.

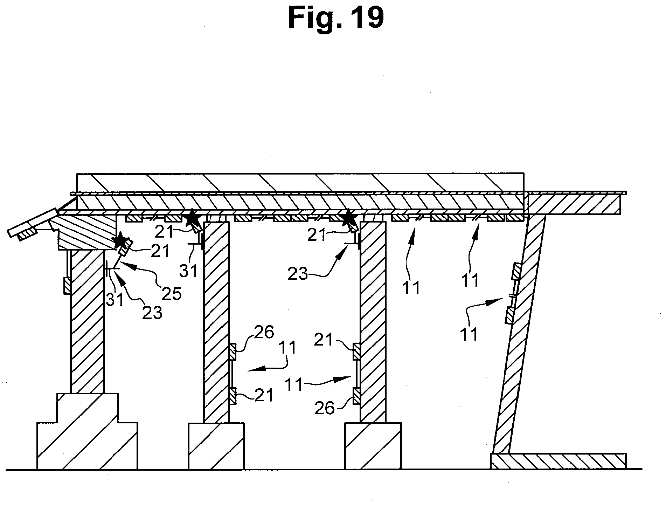

Dans l'exemple illustré à la figure 2, une telle installation 10 peut donc être équipée de plusieurs dispositifs de mesure 11 placés à différents endroits du ou des édifices dont il convient de surveiller l'état structurel (illustré à la figure 19).

Selon une variante de l'invention, l'installation 10 peut comporter au moins une unité relai 15 qui comporte un récepteur 16 des données émises par les moyens de transmission 14 du ou des dispositif(s) de mesures 11. Le récepteur 16 est configuré de manière à recevoir des données issues d'un ou de plusieurs dispositif(s) de mesure 11 situé(s) dans une sphère de réception 16a déterminée.

Selon cette variante, le récepteur 16 coopère avec les moyens de transmission 14 de manière à constituer un ensemble émetteur/récepteur complémentaire. En ce sens, préférentiellement, les moyens de transmission 14 et le récepteur 16 sont de type radiofréquence, notamment en raison de leur simplicité de conception, de leur fiabilité et de leur faible consommation d'énergie.

L'unité relai 15 peut également comporter des moyens d'enregistrement 17 des données transmises par le ou les dispositif(s) de mesure 11. De tels moyens d'enregistrement 17 peuvent se présenter par exemple sous forme d'une mémoire EEPROM associée à un microcontrôleur adapté.

Cette unité relai 15 comporte encore des moyens de transfert à distance 18 permettant de transférer, de manière périodique, les données enregistrées en direction d'une ou plusieurs unités de traitement distantes 18a.

Ces moyens de transfert à distance 18 peuvent également être de type à radiofréquence et seront, préférentiellement, plus adaptés à une transmission sécurisée et à longue distance vers l'unité de traitement distante 18a.

Ainsi, ces moyens de transfert à distance 18 peuvent se présenter sous forme d'une carte de raccordement à un réseau internet et/ou de tout système d'intercommunication adapté tel qu'un type de réseau GSM. De manière préférentielle, l'unité relai 15 intègre plusieurs moyens de transfert à distance 18 se distinguant par le mode d'émission, filaire ou non, ou le protocole de transmission (sms, mms, etc.).

Toutefois, selon une autre variante de l'invention, les moyens de transmission 14 transmettent directement les données générées par le dispositif de mesure 11 vers l'unité de traitement distante 18a. En ce sens les moyens de transmission 14 peuvent se présenter sous forme d'une carte de raccordement à un réseau internet et/ou de tout système d'intercommunication adapté tel qu'un type de réseau GSM.

Selon cette variante, le dispositif de mesure 11 peut également comprendre une mémoire afin de stocker les données générées localement. Avantageusement, l'installation 10 peut être mise en oeuvre sur un édifice, tel qu'un pont se situant de manière très éloignée de tout réseau internet, tandis que certains réseaux d'intercommunication sont à un niveau de réception très faible. En intégrant différents moyens de transfert à distance 14, 18, l'installation 10, selon l'invention, peut être rendue fonctionnelle dans la plus grande majorité des situations rencontrées.

A ce propos, l'unité relai 15 comporte, préférentiellement, tout comme un dispositif de mesure 11, des moyens d'alimentation électrique autonomes 19. Les moyens d'alimentation électrique autonomes 19 peuvent également être combinés avec des moyens de raccordement à une alimentation électrique d'un réseau externe. L'unité relai 15 peut également être raccordée à des moyens de production d'énergie renouvelable tels que des panneaux photovoltaïques installés sur site.

Selon une autre particularité de la présente invention, un dispositif de mesure 11 comportant au moins un capteur 13 de vibrations et/ou de distance, comprend au moins un module référentiel 21. Le dispositif de mesure 11 est également pourvu de moyens de mesure de déplacement 22 du module référentiel 21 par rapport à une cible 23.

Selon un premier mode de réalisation non-revendiqué illustré à la figure 3, les moyens de mesure de déplacement 22 sont des moyens de mesure optiques. Dans cet exemple, ces moyens de mesure de déplacement 22 de type optique sont définis par un système émetteur 24a et récepteur 24b à rayon laser 24. En particulier, de tels moyens de mesure de déplacement 22 formés par un système à rayon laser 24 permettent aisément de déterminer un déplacement de la cible 23 vers laquelle est orientée le rayon laser 24 selon trois axes X, Y, Z.

Ainsi, appliquée au comportement d'une fissure et en plaçant le module référentiel 21 d'un côté de la fissure, une cible 23, de l'autre côté de la fissure, un tel système à rayon laser 24 est en capacité de surveiller le comportement et l'évolution de cette fissure selon trois axes X, Y, Z. Avantageusement, il est possible de mesurer un écartement et/ou une réduction de la fissure. La mesure selon trois axes permet également de mesurer un déport radial et/ou transversal des parois A jouxtant la fissure.

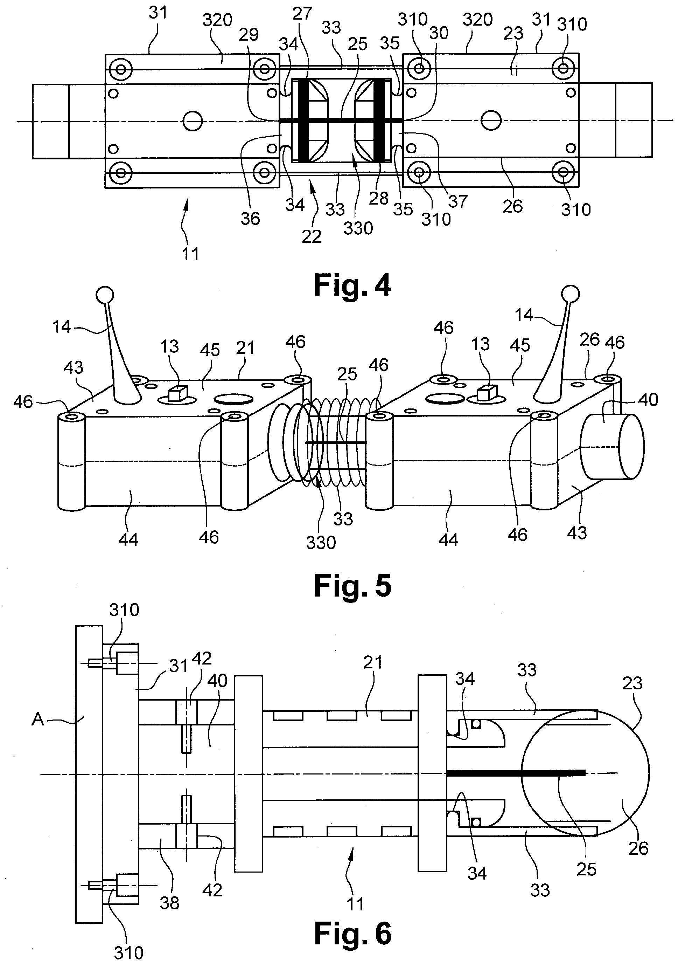

Selon un autre mode de réalisation (revendiqué) illustré aux figures 4 à 11, les moyens de mesure de déplacement 22 comprennent au moins un câble polymérique 25 élastique conducteur à résistivité variable. En effet, la résistivité du câble polymérique 25 varie en fonction de sa déformation et/ou de sa tension entre le module référentiel 21 et la cible 23. Ainsi, le suivi de l'activité électrique du câble polymérique permet de mesurer l'écartement entre le module référentiel 21 et la cible 23. Il est également possible de mesurer des vibrations qui se produisent selon l'axe longitudinal du câble polymérique 25. De surcroit, l'intensité de l'étirement du câble polymérique 25 et/ou de ses vibrations peut être également évaluée au travers de la variation de la tension du potentiel électrique du câble polymérique 25.

Dans le cas des figures 4 à 12 et 16 à 19, la cible 23 se présente sous forme d'un module cible 26.

De préférence, au moins un module référentiel 21 et/ou un module cible 26 comporte au moins un capteur de résistivité 27, 28. Un capteur de résistivité 27, 28 coopère avec le câble polymérique 25 à l'une et/ou l'autre de ses extrémités de fixation 29, 30. Chaque extrémité de fixation 29, 30 du câble polymérique 25 est fixée au niveau du module référentiel 21 et du module cible 26.

Avantageusement, le dispositif de mesure 11 comporte une gaine de protection 33 du câble polymérique 25. La gaine de protection 33 assure une mesure sans perturbations extérieures et protège le câble polymérique 25 des intempéries.

En somme, le câble polymérique 25 s'étend à l'intérieur d'un espace de mesure confiné 330 qui est ménagé par la gaine de protection 33. La gaine de protection 33 est par ailleurs emboîtée et fixée à ses extrémités 34, 35 sur des embouts de réception 36, 37. Les embouts de réception 36, 37 sont respectivement disposés au niveau du module référentiel 21 et du module cible 26. Chaque capteur de résistivité 27, 28 est disposé au niveau d'un embout de réception 36, 37 d'un module référentiel 21 et/ou d'un module cible 26.

Une telle gaine de protection 33 présente un caractère flexible, pour accompagner librement dans leurs déplacements le module référentiel 21 et le module cible 26.

Par ailleurs, un module référentiel 21 et, selon le cas, le module cible 26 comportent un support de fixation 31 permettant de les rapporter fixement à une paroi A de l'édifice dont il convient de surveiller la structure.

Dans le mode de réalisation illustré aux figures 4 à 11, les supports de fixation 31 se présentent sous forme de plaques de fixation 320 pourvues d'ouvertures de passage de vis de fixation 310.

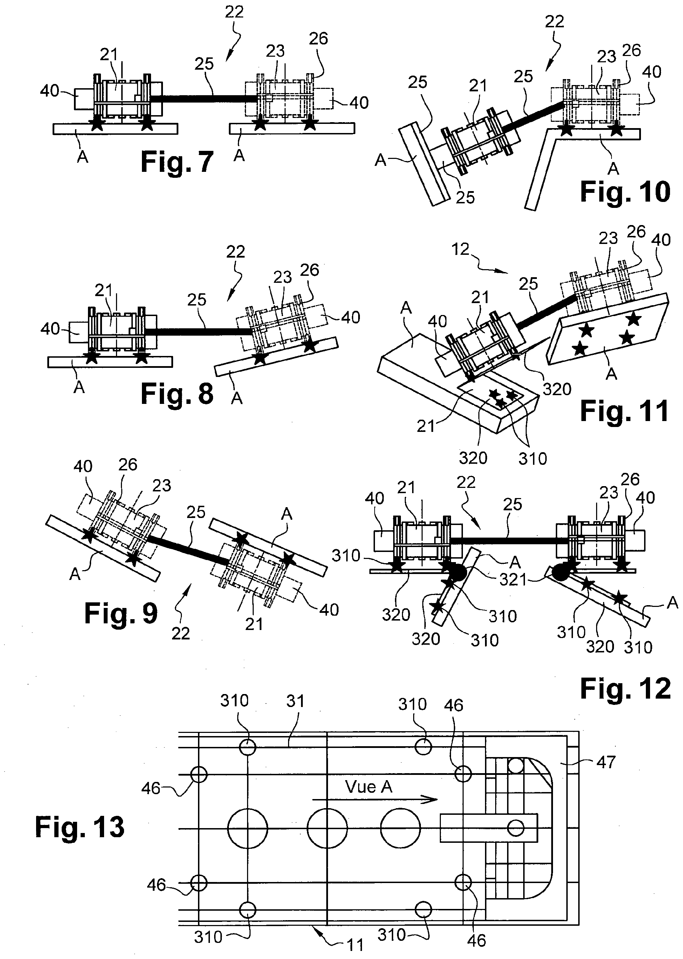

Comme illustré aux figures 10 et 11, les supports de fixation 31 peuvent comprendre deux plaques articulées l'une à l'autre au travers d'un axe 321. Dans cette configuration, la position angulaire d'une plaque de fixation 320 par rapport à l'autre peut être verrouillée au travers de moyens de serrage coopérant avec l'axe 320.

Avantageusement, un module référentiel 21 et/ou un module cible 26 est monté de manière amovible sur son support de fixation 31. Cette configuration permet de rendre solidaire le support de fixation 31 de l'édifice, sans qu'au cours de cette opération il y ait un risque d'altération d'un module 21, 26.

Toutefois, ce caractère amovible ne doit pas être à l'origine d'une perte de précision dans les mesures effectuées. En particulier, un module 21, 26 doit être garanti d'un positionnement précis sur le référentiel que constitue son support de fixation 31.

Dans ce but, le support de fixation 31 peut comporter des moyens d'emboîtement 38 de type femelle ou mâle pour la réception d'une pièce d'emboîtement complémentaires 40 mâles ou femelles que comporte un module 21, 26. Les moyens d'emboîtement 38 et la pièce d'emboîtement complémentaire 40 correspondent à un système d'ajustement adapté par rapport à la précision recherchée. Par exemple, leur longueur d'emboîtement est définie en fonction du niveau de précision souhaité pour le positionnement d'un module 21, 26 sur son support de fixation 31.

En particulier, et comme représenté sur la figure 5, les moyens d'emboîtement femelles 38 peuvent être définis sous forme d'une douille dans laquelle viennent s'emboîter la pièce d'emboîtement complémentaire mâle 40, 41. La pièce d'emboîtement complémentaire mâle 40 peut être définie par un embout de section ajustée à la section interne d'une douille. En pratique, l'embout de section est ajusté à la section interne de la douille sur une longueur d'emboîtement correspondant au moins à la moitié de la section de l'embout voire, égale à cette section. Les moyens d'emboîtement 38 et la pièce d'emboîtement 40 sont complétés par des moyens de serrage 42 adaptés.

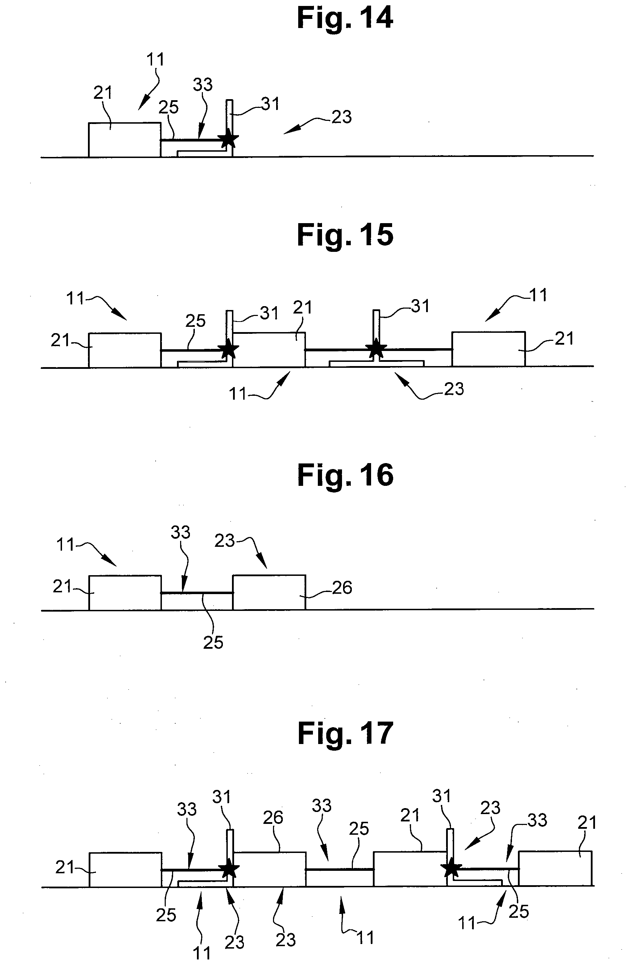

Comme illustré aux figure 14, 15 et 19, la cible 23 peut être constituée par un support de fixation 31. Dans ces figures, le support de fixation 31 se présente sous la forme d'une équerre.

Dans cette configuration, les moyens de mesure 22 peuvent comprendre un câble électrique de retour d'information. Ce câble électrique permet de renvoyer à un capteur de résistivité 27, 28 du module référentiel 21, les données de variation de la résistivité du câble polymérique 25. Ledit câble électrique permet aussi à un capteur de résistivité 27, 28 de mesurer des données relatives à la tension du courant électrique traversant le câble polymérique 25.

Le câble électrique est relié à une extrémité de fixation 29, 30 du câble polymérique 25. Ledit câble électrique est enroulé autour du câble polymérique 25 ou intégré à la gaine de protection 33. Cet agencement permet audit câble électrique de rejoindre l'autre extrémité de fixation 29, 30 du câble polymérique 25 où se situe un capteur de résistivité 27, 28 du module référentiel 21.

Toujours dans le même but d'optimiser la précision des mesures effectuées, un module 21, 26 peut être défini, par un boîtier 43 rigide. A titre d'exemple, le boitier est conçu sous forme de deux demi-coquilles 44, 45 solidarisées l'une à l'autre. Les deux demi-coquilles renferment tous les composants électroniques et mécaniques nécessaires. De préférence, le boîtier 43 est réalisé étanche à l'eau et à l'air.

Tel qu'illustré à la figure 5, le boitier 43 est équipé de trous de réservation 46 aux fins de fixer le boitier 43 à un support de fixation 31 ou directement à une paroi A. Plus particulièrement, chaque demi-coquille 44, 45 comporte quatre trous de réservation 46 ménagés à chaque angle d'une face supérieure et inférieure du boitier 43.

De manière avantageuse, la conception des supports de fixation 31 et celle du boitier 43, permettent de relier un module référentiel 21 et un module cible 26 quelque soit l'orientation des parois A qui jouxtent la fissure à surveiller.

Il est ainsi possible de surveiller l'évolution d'une fissure comprise entre deux parois A coplanaire (figure 7), mais aussi entre deux parois A parallèles l'une à l'autre (figure 9) ou entre deux parois A s'étendant selon deux plans sécants (figures 8, 10, 11 et 12).

Selon l'invention, un tel module 21, 26 peut encore renfermer bien d'autres capteurs 13 tels que des capteurs de température, de pression, d'humidité, voire des capteurs de déplacement comme un gyroscope trois axes et/ou un accéléromètre trois axes ou un capteur de champ magnétique.

Avantageusement, les données mesurées par ces capteurs 13 permettent de mesurer des paramètres environnementaux. Les données des paramètres environnementaux peuvent être corrélées avec des mesures de suivi de l'évolution d'une fissure. Il alors possible de créer un modèle numérique évolutif de l'état structurel de l'édifice.

En particulier, il est possible de créer un modèle numérique évolutif d'une fissure en fonction des paramètres environnementaux subit par l'édifice que l'on surveille.

Ces paramètres environnementaux peuvent également apporter des informations directes sur l'évolution de la fissure.

Le capteur de champ magnétique permet de mesurer une évolution du champ magnétique à proximité de la fissure. Cette évolution peut être due au déplacement d'un module 21, 26, à la mise à nue d'une ferraille ou à sa dégradation, au rapprochement d'un édifice métallique etc.

Le capteur de température et ou le capteur de pression atmosphérique permettent de corréler les évolutions d'une fissure ou de l'état structurel de l'édifice en fonction de conditions atmosphériques.

Enfin, les capteurs de déplacement permettent de mesurer les vibrations de l'édifice, leur intensité, leur durée. Ces données peuvent être également corrélées avec l'évolution de l'état structurel de l'édifice et/ou d'une fissure.

Le dispositif de mesure 11 dispose bien entendu de moyens électroniques. Les moyens électroniques sont alimentés en énergie par les moyens d'alimentation autonomes 12.

Les moyens électroniques permettent de synchroniser les mesures des différents capteurs 13, 27, 28 qui équipent le dispositif de mesure 11. Les moyens électroniques assurent également l'enregistrement des données générées au sein de la mémoire du dispositif de mesure 11. Enfin, les moyens électroniques permettent de contrôler l'activation des moyens de transmission 14 en vue de transférer les données générées vers une unité de traitement distante 18a ou vers une unité relai 15.

A ces fins, de manière classique, les moyens électroniques peuvent comprendre un processeur équipé d'une horloge. Le processeur est configuré pour exécuter des algorithmes stockés dans la mémoire du dispositif de mesure 11.

Dans l'exemple de la figure 13, le dispositif de mesure 11 comporte un bouchon 47 afin de le rendre hermétique à l'air et l'eau. Dans cet exemple, le dispositif de mesure 11 est utilisé pour surveiller l'état structurel d'un édifice au travers notamment de ces capteurs 13 vibrationnels et, optionnellement, de capteurs 13 environnementaux. Ce mode de réalisation peut être utilisé pour surveiller le comportement d'une structure telle qu'un panneau publicitaire, des cages de foot, ou un panneau de basketball.

De plus, le dispositif de mesure 11 comportant des moyens de transmission à distance 14 pour transmettre les mesures effectuées à l'aide de ce ou ces capteur(s) 13 vers l'unité relai 15 ou vers une unité de traitement distante 18a. De tels moyens de transmission à distance 14 sont implantés dans ce boîtier 43 correspondant à un module référentiel 21 et/ou à un module cible 26. Il en va de même en ce qui concerne les moyens d'alimentation autonomes 12.

Si un module référentiel 21 et un module cible 26 peuvent être équipés, chacun, de tels moyens de transmission 14 et de moyens d'alimentation électrique autonomes 12, il peut encore être prévue une liaison filaire étanche entre un module cible 26 et le module référentiel 21. Dans ce cas, le dispositif de mesure 11 peut se contenter de moyens de transmission 14 et de moyens d'alimentation électrique autonomes 12 uniques implantés dans un seul module 21, 26, par exemple, dans le module référentiel 21.

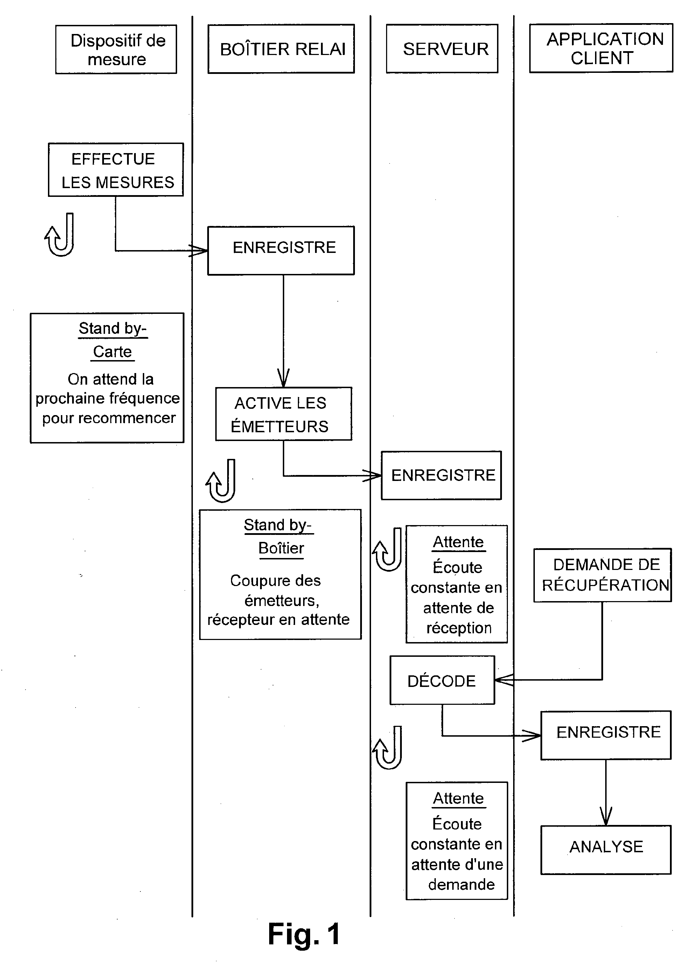

Selon l'invention, l'installation 10 permet la mise en oeuvre d'un procédé de surveillance, illustré à la figure 1.

De manière générale, le procédé de surveillance est piloté par les moyens électroniques du dispositif de mesure 11. Ces moyens électroniques sont paramétrables par l'utilisateur en fonction de l'édifice à surveiller et du ou des paramètre(s) que l'on souhaite mesurer. En effet, le procédé de surveillance permet de surveiller au moins une mesure de l'état structurel d'un édifice.

Dans cet objectif, le procédé de surveillance comprend une étape de paramétrage d'un état initial d'au moins un dispositif de mesure 11. Comme évoqué précédemment, chaque dispositif de mesure 11 intègre au moins un capteur 13 de vibrations et des moyens de mesure 22 de déplacement.

Les mesures opérées par ces instruments génèrent des données relatives à l'état de la structure de l'édifice. Or, les mesures réalisées lors de l'étape de paramétrage sont assimilées comme des mesures étalons caractérisant l'état initial du dispositif de mesure 11.

Les mesures étalons sont stockées en local et/ou transmises à une unité de traitement 18a distante qui les stocke comme état initial du dispositif de mesure 11.

Le procédé de surveillance comporte une étape de relevés périodiques d'au moins une mesure de vibration et/ou de déplacement au moyen d'au moins un dispositif de mesure 11 intégrant au moins un capteur 13 de vibration et des moyens de mesure 22 de déplacement.

Comme précédemment décrit, un dispositif de mesure 11 peut intégrer divers capteurs 13 permettant de mesurer une vibration, un déplacement, une accélération, une température, une pression atmosphérique, l'humidité etc.

Le procédé de surveillance comporte une étape de codage des données. En effet, chaque mesure génère des données codées sous forme de lignes d'octets codées. Chaque ligne d'octets codée comporte une première suite d'octets correspondant à une signature du dispositif de mesure 11. La signature du dispositif de mesure 11 permet d'identifier le dispositif de mesure 11 qui a généré ces données codées.

Les données codées comportent également une seconde suite d'octets permettant d'identifier l'instant T auquel chaque mesure a été effectuée. Bien entendu, chaque ligne d'octets comporte des suites d'octets relatives au type de capteur 13, équipant le dispositif de mesure 11, qui a effectué la mesure.

Le procédé de surveillance peut comprendre une étape de mémorisation locale des données codées dans la mémoire du dispositif de mesure 11. Plus généralement, les données générées sont stockées localement au sein de la mémoire du dispositif de mesure 11.

Le procédé comporte également une étape de transmission périodique des données codées vers au moins une unité relai 15 ou directement vers une unité de traitement 18a. A noter que cette périodicité de transmission du ou des dispositif(s) de mesure 11 peut correspondre à la périodicité de relevés des mesures.

Lorsque l'utilisateur choisi de transférer les données générées vers une unité relai 15. Cette unité relai 15 est paramétrée pour réceptionner des données codées d'un ou de plusieurs dispositif(s) de mesure 11 situé(s) dans une sphère de réception 16a déterminée. La sphère de réception 16a comprend un rayon compris entre 50 mètres et 500 mètres, de préférence la sphère de réception 16a comprend un rayon compris entre 100 mètres et 200 mètres.

Lorsque les données générées sont transmises à une unité relai 15, il est possible de les mémoriser au niveau de la mémoire du dispositif de mesure 11 ou au niveau de l'unité relai 15. Selon cette seconde possibilité, à réception des données codées, l'unité relai 15 réalise alors une étape d'enregistrement brute des données codées transmise(s). En pratique, l'étape d'enregistrement brute est réalisée au niveau d'une mémoire équipant l'unité relai 15.

Le procédé de surveillance peut ainsi comporter une étape de transfert périodique des données codées enregistrées par l'unité relai 15 en direction d'au moins une unité de traitement 18a distante. Là encore, la périodicité selon laquelle ces données codées enregistrées par l'unité relai 15 sont adressées à l'unité de traitement 18a, peut correspondre à la périodicité selon laquelle les mesures du ou des dispositif(s) de mesure 11 sont transmises à l'unité relai 15.

De manière préférentielle, cette unité relai 15 adressera ces données enregistrées à l'unité de traitement 18a selon une fréquence plus réduite. La réduction de la fréquence permet de solliciter moins souvent les moyens de transfert 18 à distance dont l'unité relai 15 est équipée.

Lors de l'étape de transfert des données vers l'unité de traitement 18a, il est procédé à une opération de test pour assurer la transmission des données par l'intermédiaire des moyens de transfert 18 à distance et/ou selon le protocole de transfert le plus adapté. Cette caractéristique permet une mise en oeuvre fonctionnelle et fiable de l'installation 10 quel que soit l'endroit où elle est implantée.

L'unité de traitement 18a réalise une étape d'enregistrement local des données codées transférées par l'unité relai 15 ou directement par le dispositif de mesure 11. En pratique, l'unité de traitement 18a enregistre dans une mémoire locale les données codées transmises par le ou les dispositif(s) de mesures 11 ou via une ou plusieurs unité(s) relai(s) 15.

Le procédé comporte une étape de décodage des données codées qui est réalisée par l'unité de traitement 18a. L'étape de décodage permet de réaliser une étape de tri de manière à ordonner les données. Les données sont ainsi ordonnées en fonction du dispositif de mesure 11 dont elles proviennent, au type de capteur 13 ayant réalisé la mesure et à l'instant T où la ou les mesure(s) ont été effectuées.

A ces fins, l'unité de traitement 18a utilise les suites d'octets correspondantes à la signature du dispositif de mesure 11, au type de capteur 13 ayant effectué la mesure et à l'instant T auquel la mesure a été effectuée.

Le procédé selon l'invention peut comporter une étape de recoupement des données décodées permettant de lier les différents phénomènes qui ont été mesurés à un instant T.

Par ailleurs, le procédé de surveillance possède une étape de comparaison des données de vibration et/ou de déplacement mesurées à un instant T par rapport aux données de l'état initial du dispositif de mesure 11.

Le procédé de surveillance comporte une étape d'avertissement. L'étape d'avertissement permet d'avertir l'utilisateur lorsque les données de vibrations et/ou de déplacement mesurées à un instant T dépassent un écart seuil déterminé par rapport à l'état initial d'un dispositif de mesure 11.

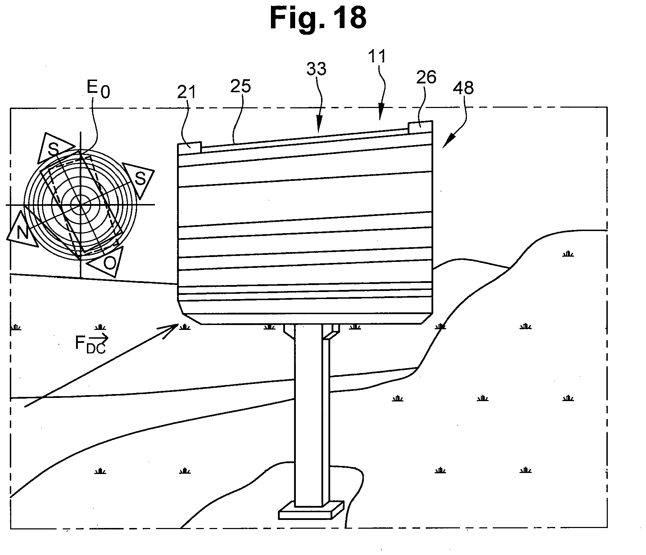

La figure 18 illustre à titre indicatif, un panneau de signalisation 48 sur lequel est positionné un dispositif de mesure 11. Plus précisément, le dispositif de mesure est positionné sur le champ supérieur du panneau de signalisation 48. Dans cet exemple, le dispositif de mesure 11 comporte un module référentiel 21 et un module cible 26. Entre les deux modules 21, 26 s'étend un câble polymérique 25. Il est à noter que la gaine de protection 33 n'est ici pas représentée afin de simplifier la lecture du dessin.

Suite à une étape de paramétrage, un état initial E₀ est déterminé (illustré dans l'angle supérieur de la figure 18). Lorsqu'une force *F_{D̅C}* est appliquée au panneau de signalisation 48, celui-ci entre en vibrations et/ou voit sa position/inclinaison modifiée par rapport à son état initial E₀. La force *F_{D̅C}* peut être générée par des phénomènes environnementaux tels que le vent ou par un choc issu dans ce cas d'une sortie de route d'un véhicule.

Si lors des vibrations de l'édifice ou si sa position se trouve modifiée selon un écart supérieur à un écart seuil déterminé, l'unité de traitement 18a déclenche alors un avertissement à destination de l'utilisateur. L'avertissement peut être de type message (sms, email etc.). L'avertissement a pour fonction d'avertir l'utilisateur que l'état structurel de l'édifice est en défaut et nécessite une intervention de consolidation. Bien entendu, en cas d'écart extrême, il est possible de paramétrer une alerte urgente nécessitant un déplacement rapide sur le site de l'édifice.

De manière avantageuse, le procédé de surveillance peut comporter une étape de prédiction. L'étape de prédiction est réalisée par un algorithme d'apprentissage qui stocke les données recoupées et formule des modèles de prédiction en fonction des données recoupées au cours d'une période de surveillance définie d'un ou de plusieurs édifice(s).

## Revendications

1. Dispositif de mesure (11) de l'état structurel d'un édifice, comprenant au moins un module référentiel (21), une cible (23), ainsi que des moyens de mesure (22) de déplacement de la cible (23), formée par un support de fixation (31) ou par un module cible (26), par rapport au module référentiel (21), les moyens de mesure (22) comportent des moyens de détection de déplacement de la cible (23) dans un référentiel trois axes (X, Y, Z), **caractérisé en ce qu'**il comporte un capteur de vibrations mesurant les vibrations de l'édifice, les moyens de mesure (22) de déplacement comportant un câble polymérique (25) élastique conducteur à résistivité variable, le câble polymérique (25) relie, en étant maintenu en tension, le module référentiel (21) et la cible (23), de plus, le au moins un module référentiel (21) et/ou la cible (23) comporte au moins un capteur de résistivité (27, 28) coopérant avec le câble polymérique (25) .

2. Dispositif de mesure (11) selon la revendication 1, **caractérisé en ce qu'**il comprend une gaine de protection (33) ménageant un espace de mesure confiné (330) dans lequel s'étend le câble polymérique (25).

3. Dispositif de mesure (11) selon l'une des revendications 1 et 2, **caractérisé en ce que** le module référentiel (21) et/ou une cible (23) comportent un support de fixation (31) permettant de les rapporter fixement à une paroi (A) de l'édifice dont il convient de surveiller la structure.

4. Dispositif de mesure (11) selon la revendication 2 , **caractérisé en ce que** les moyens de mesure (22) comprenant un câble électrique de retour d'information qui est relié au câble polymérique (25) et s'étend entre le support de fixation (31), le câble électrique est enroulé autour du câble polymérique (25) ou intégré à la gaine de protection (33) .

5. Dispositif de mesure (11) selon l'une des revendications 1 à 4, **caractérisé en ce qu'**un module (21, 26) est défini par un boîtier (43) rigide et étanche à l'eau et à l'air.

6. Dispositif de mesure (11) selon la revendication 5, **caractérisé en ce que** le boitier (43) est conçu sous forme de deux demi-coquilles (44, 45) solidarisées l'une à l'autre.

7. Procédé de surveillance d'au moins une mesure de l'état structurel d'un édifice mettant en oeuvre au moins un dispositif de mesure (11) selon l'une des revendications 1 à 6, **caractérisé en ce qu'**il comporte :
- une étape de paramétrage d'un état initial d'au moins un dispositif de mesure (11) intégrant au moins le capteur (13) de vibrations et les moyens de mesure (22) de déplacement, chaque mesure générant des données ;
- une étape de relevés périodiques d'au moins une mesure de vibration et/ou de déplacement au moyen d'au moins un dispositif de mesure (11) générant des données de vibrations et/ou de déplacement ;
- une étape de transmission périodique des données générées vers au moins une unité de traitement (18a) distante du dispositif de mesure ;
- une étape de comparaison des données de vibration et/ou de déplacement par rapport à l'état initial du dispositif de mesure (11) ; et
- une étape d'avertissement, lorsque les données de vibrations et/ou de déplacement dépassent un écart seuil déterminé par rapport à l'état initial d'un dispositif de mesure (11).

8. Procédé de surveillance selon la revendication 7, **caractérisé en ce qu'**il comporte une étape de codage des données permettant d'identifier la provenance des données enregistrées en fonction :
- du dispositif de mesure (11) dont elles proviennent ;
- du capteur (13) les ayant mesurés ; et
- de l'instant T auquel elles ont été mesurées.

9. Procédé de surveillance selon l'une des revendications 7 et 8, **caractérisé en ce qu'**il comporte une étape de tri des données de manière à les ordonner en fonction :
- du dispositif de mesure (11) dont elles proviennent ;
- du capteur (13) les ayant mesurés ; et
- de l'instant T auquel elles ont été mesurées.

10. Installation (10) de surveillance de l'état structurel d'un édifice, **caractérisée par le fait qu'**elle comporte, d'une part, au moins un dispositif de mesure (11) selon l'une des revendications 1 à 6, le au moins un dispositif de mesure (11) étant équipé de moyens de transmission (14) à distance, et d'autre part, une unité de traitement (18a) distante du dispositif de mesure (11), l'unité de traitement (18a) étant adaptée à réceptionner et classer les données transférées en fonction :
- du dispositif de mesure (11) dont elles proviennent ;
- du capteur (13) les ayant mesurés ; et
- de l'instant T auquel elles ont été mesurées.

11. Installation selon la revendication 10, **caractérisée en ce que** le au moins un module référentiel (21) est associé à la cible (23), le module référentiel (21) et la cible (23) étant reliés au travers du câble polymérique (25).

## Patentansprüche

1. Vorrichtung (11) zum Vermessen des strukturellen Zustands eines Gebäudes, umfassend mindestens ein Referenzmodul (21), ein Ziel (23), sowie Mittel (22) zum Messen einer Verschiebung des Ziels (23), das in Bezug auf das Referenzmodul (21) durch einen Befestigungsträger (31) oder ein Zielmodul (26) gebildet wird, wobei die Messmittel (22) Mittel zum Erfassen der Verschiebung des Ziels (23) in einem dreiachsigen (X, Y, Z) Referenzsystem aufweisen, **dadurch gekennzeichnet, dass** sie einen Vibrationssensor aufweist, der die Vibrationen des Gebäudes misst, wobei die Mittel (22) zum Messen der Verschiebung ein leitfähiges elastisches Polymerkabel (25) mit variablem spezifischem Widerstand aufweisen, wobei das Polymerkabel (25), während es unter Spannung gehalten wird, das Referenzmodul (21) und das Ziel (23) verbindet, wobei ferner das mindestens eine Referenzmodul (21) und/oder das Ziel (23) mindestens einen Widerstandssensor (27, 28) aufweist, der mit dem Polymerkabel (25) zusammenwirkt.

2. Messvorrichtung (11) nach Anspruch 1, **dadurch gekennzeichnet, dass** sie eine Schutzhülle (33) umfasst, die einen begrenzten Messraum (330) vorsieht, in dem sich das Polymerkabel (25) erstreckt.

3. Messvorrichtung (11) nach einem der Ansprüche 1 und 2,
**dadurch gekennzeichnet, dass** das Referenzmodul (21) und/oder ein Ziel (23) einen Befestigungsträger (31) aufweisen, der es ermöglicht, sie fest an einer Wand (A) des Gebäudes, dessen Struktur überwacht werden soll, anzubringen.

4. Messvorrichtung (11) nach Anspruch 2, **dadurch gekennzeichnet, dass** die Messmittel (22) ein elektrisches Informationsrückleitungskabel umfassen, das mit dem Polymerkabel (25) verbunden ist und sich zwischen dem Befestigungsträger (31) erstreckt, wobei das elektrische Kabel um das Polymerkabel (25) herum gewickelt oder in die Schutzhülle (33) integriert ist.

5. Messvorrichtung (11) nach einem der Ansprüche 1 bis 4,
**dadurch gekennzeichnet, dass** ein Modul (21, 26) durch ein starres und wasser- und luftdichtes Gehäuse (43) definiert ist.

6. Messeinrichtung (11) nach Anspruch 5, **dadurch gekennzeichnet, dass** das Gehäuse (43) in Form zweier fest miteinander verbundener Halbschalen (44, 45) ausgebildet ist.

7. Verfahren zum Überwachen mindestens einer Messung des strukturellen Zustands eines Gebäudes, das mindestens eine Messvorrichtung (11) nach einem der Ansprüche 1 bis 6 implementiert, **dadurch gekennzeichnet, dass** es aufweist:
- einen Schritt eines Einstellens eines Anfangszustands von mindestens einer Messvorrichtung (11), die mindestens den Vibrationssensor (13) und die Mittel (22) zum Messen der Verschiebung integriert, wobei jede Messung Daten erzeugt;
- einen Schritt von periodischen Ablesungen mindestens einer Messung von Vibration und/oder Verschiebung mittels mindestens einer Messvorrichtung (11), die Vibrations- und/oder Verschiebungsdaten erzeugt;
- einen Schritt eines periodischen Übertragens der erzeugten Daten an mindestens eine von der Messvorrichtung entfernte Verarbeitungseinheit (18a);
- einen Schritt eines Vergleichens der Vibrations- und/oder Verschiebungsdaten in Bezug auf den Anfangszustand der Messvorrichtung (11); und
- einen Warnschritt, wenn die Vibrations- und/oder Verschiebungsdaten eine bestimmte Schwellendifferenz in Bezug auf den Anfangszustand einer Messvorrichtung (11) überschreiten.

8. Überwachungsverfahren nach Anspruch 7, **dadurch gekennzeichnet, dass** es einen Schritt eines Kodierens der Daten aufweist, der es ermöglicht, die Herkunft der aufgezeichneten Daten zu identifizieren, gemäß:
- der Messvorrichtung (11), von der sie kommen;
- dem Sensor (13), der sie gemessen hat; und
- der Zeit T, zu der sie gemessen wurden.

9. Überwachungsverfahren nach einem der Ansprüche 7 und 8,
**dadurch gekennzeichnet, dass** es einen Schritt eines Sortierens der Daten aufweist, um sie zu ordnen, gemäß:
- der Messvorrichtung (11), von der sie kommen;
- dem Sensor (13), der sie gemessen hat; und
- der Zeit T, zu der sie gemessen wurden.

10. Anlage (10) zum Überwachen des strukturellen Zustands eines Gebäudes, **dadurch gekennzeichnet, dass** sie einerseits mindestens eine Messvorrichtung (11) nach einem der Ansprüche 1 bis 6, wobei die mindestens eine Messvorrichtung (11) mit Fernübertragungsmitteln (14) ausgestattet ist, und andererseits eine von der Messvorrichtung (11) entfernte Verarbeitungseinheit (18a) aufweist, wobei die Verarbeitungseinheit (18a) angepasst ist, um die übermittelten Daten zu empfangen und zu klassifizieren gemäß:
- der Messvorrichtung (11), von der sie kommen;
- dem Sensor (13), der sie gemessen hat; und
- der Zeit T, zu der sie gemessen wurden.

11. Anlage nach Anspruch 10, **dadurch gekennzeichnet, dass** das mindestens eine Referenzmodul (21) dem Ziel (23) zugeordnet ist, wobei das Referenzmodul (21) und das Ziel (23) durch das Polymerkabel (25) verbunden sind.

## Claims

1. Device (11) for measuring the structural state of a building, comprising at least one reference module (21) and a target (23), as well as means (22) for measuring the movement of the target (23), formed by an attachment support (31) or by a target module (26), relative to the reference module (21), the measurement means (22) comprising means for detecting the movement of the target (23) in a three-axis reference system (X, Y, Z), **characterized in that** it comprises a vibration sensor which measures the vibrations of the building, the movement measurement means (22) comprising a resilient conductive polymeric cable (25) with variable resistivity, the polymeric cable (25) connects, by being kept under tension, the reference module (21) and the target (23), and the at least one reference module (21) and/or the target (23) comprises at least one resistivity sensor (27, 28) which interacts with the polymeric cable (25).

2. Measurement device (11) according to claim 1, **characterized in that** it comprises a protective sheath (33) providing a confined measurement space (330) in which the polymeric cable (25) extends.

3. Measurement device (11) according to any of claims 1 and 2, **characterized in that** the reference module (21) and/or a target (23) comprise an attachment support (31) enabling them to be securely mounted on a wall (A) of the building of which the structure is to be monitored.

4. Measurement device (11) according to claim 2, **characterized in that** the measurement means (22) comprising an electrical feedback cable which is connected to the polymeric cable (25) and extends through the attachment support (31), the electrical cable is wound around the polymeric cable (25) or integrated with the protective sheath (33).

5. Measurement device (11) according to any of claims 1 to 4, **characterized in that** a module (21, 26) is defined by a rigid housing (43) which is watertight and airtight.

6. Measurement device (11) according to claim 5, **characterized in that** the housing (43) is designed in the form of two half-shells (44, 45) secured to one another.

7. Method for monitoring at least one measurement of the structural state of a building using at least one measurement device (11) according to any of claims 1 to 6, **characterized in that** it comprises:
- a step of parameterizing an initial state of at least one measurement device (11) incorporating at least the vibration sensor (13) and the movement measurement means (22), each measurement generating data;
- a step of periodically reading at least one vibration measurement and/or movement measurement by means of at least one measurement device (11) generating vibration data and/or movement data;
- a step of periodically transmitting the generated data to at least one processing unit (18a) which is remote from the measurement device;
- a step of comparing the vibration data and/or movement data relative to the initial state of the measurement device (11); and
- a step of issuing a warning when the vibration data and/or movement data exceed a determined deviation threshold relative to the initial state of a measurement device (11).

8. Monitoring method according to claim 7, **characterized in that** it comprises a step of encoding data which makes it possible to identify the origin of the recorded data according to:
- the measurement device (11) from which the data originate;
- the sensor (13) by which the data were measured; and
- the time T at which the data were measured.

9. Monitoring method according to any of claims 7 and 8, **characterized in that** it comprises a step of sorting the data so that the data can be ordered according to:
- the measurement device (11) from which the data originate;
- the sensor (13) by which the data were measured; and
- the time T at which the data were measured.

10. Apparatus (10) for monitoring the structural state of a building, **characterized in that** it comprises, on the one hand, at least one measurement device (11) according to any of claims 1 to 6, the at least one measurement device (11) being provided with remote transmission means (14), and on the other hand, a processing unit (18a) remote from the measuring device (11), the processing unit (18a) being suitable for receiving and classifying the transmitted data according to:
- the measurement device (11) from which the data originate;
- the sensor (13) by which the data were measured; and
- the time T at which the data were measured.

11. Apparatus according to claim 10, **characterized in that** the at least one reference module (21) is associated with the target (23), the reference module (21) and the target (23) being connected by means of the polymeric cable (25).
